# EUROPÄISCHE PATENTSCHRIFT

(11) **EP 1 812 321 B1**
(45) Veröffentlichungstag und Bekanntmachung des Hinweises auf die Patenterteilung: **31.12.2008**
(21) Anmeldenummer: 05793833.4
(22) Anmeldetag: 10.10.2005
(51) Int. Cl.: B65G 1/137

(54) **WARENUMSCHLAGLAGER UND VERFAHREN ZU DESSEN BETRIEB**
WAREHOUSE FOR TRANSFERRING GOODS AND METHOD FOR OPERATING SAID WAREHOUSE
ENTREPOT DE CHARGEMENT/DECHARGEMENT DE MARCHANDISES ET SON PROCEDE DE PRODUCTION

(30) Priorität: 22.10.2004 AT 17832004
(43) Veröffentlichungstag der Anmeldung: 01.08.2007
(73) Patentinhaber: TGW Mechanics GmbH, 4600 Wels (AT); Klug GmbH Integrierte Systeme, 92552 Teunz (DE)
(72) Erfinder: HANSL, Rudolf, 4020 Linz (AT); KLUG, Dieter, 93492 Treffelstein (DE)
(74) Vertreter: Secklehner, Günter
(86) Internationale Anmeldenummer: PCT/AT2005/000401
(87) Internationale Veröffentlichungsnummer: WO 2006/042347

(56) Entgegenhaltungen:
- EP-A- 0 943 561
- EP-A- 1 452 462
- DE-A1- 3 343 858
- DE-A1- 10 136 354
- US-A- 5 246 332
- US-A- 5 934 413

## Beschreibung

Die Erfindung betrifft ein Warenumschlaglager wie es im Oberbegriff des Anspruches 1 beschrieben ist sowie ein Verfahren zum Betrieb eines solchen wie im Oberbegriff des Anspruches 17 beschrieben.

Aus der DE 101 36 354 A1 ist ein Verfahren und eine Anlage zum Kommissionieren von Waren aus Behältern mit einem Regallager und zugeordneten Regalbediengeräten und mit Fördereinrichtungen für die Bedienung von Kommissionier-Arbeitsplätzen mit den Behältern zur Entnahme von Kommissionierware und Rücktransport der Behälter an das Lager sowie zum Abtransport von Auftragsbehältern aus dem Kommissionierbereich an den Warenausgang bekannt. Eine Nachbelieferung des Behälterlagers mit Eingangsware ist dabei in Kommissionierpausen oder Zeiten niedriger Belastung des Kommissionierbereiches vorgesehen.

Aus dem Dokument DE 33 43 858 A1 ist weiters ein Kommissionierlager bekannt, mit einem in zwei Bereiche unterteilten Warenlager und zwar für so genannte Waren mit hoher und mittlerer Entnahmehäufigkeit und für Waren mit geringer Entnahmehäufigkeit. Der Lagerbereich für die Waren mit hoher und mittlerer Entnahmehäufigkeit sind für eine einfachmanuelle Kommissionierung und mit den dazu erforderlichen Transporteinrichtungen versehen, während der Lagerbereich mit Waren mit geringer Entnahmehäufigkeit für eine mehrfach-manuelle Kommissionierung und den dazu erforderlichen Fördermitteln gerüstet ist, wobei für den Warennachschub in Großmengen die Transporteinrichtung für den Mehrfach-Kommissionierbereich dient und für den Warennachschub in Großmengen für den weiteren Lagerbereich eine Fördereinrichtung in gleicher Ausführung vorgesehen ist. Die Kommissionierung ist sowohl in paralleler wie auch in serieller Abfolge vorgesehen, wobei die parallele Kommissionierfolge bevorzugt in Zeiten mit geringem Kommissionieranfall vorgesehen ist und einen zusätzlichen Aufwand zum Zusammenführen der Teilkommissionierungen im Warenausgang erforderlich macht. Die für den Warennachschub aus dem Wareneingang in die Lagerbereiche vorgesehenen Fördereinrichtungen sind bevorzugt als Gondel-Hängeförderer ausgebildet und weisen zur Anpassung der im Umlauf geführten Gondeln an die jeweils erforderliche Einlagerungskapazität Gondelspeicher auf.

Aus einem weiteren Dokument EP 1 452 462 A2 ist eine Vorrichtung und ein Verfahren für das Kommissionieren von Waren bekannt. Die Einrichtung umfasst ein automatisiertes Regallager für in Behältern eingelagerte Waren und über Fördereinrichtungen beschickbare Kommissionierarbeitsbereiche für das Umlagern der zu kommissionierenden Ware aus den Lagerbehältern in auftragsbezogene Behälter. Den Kommissionierplätzen sind vorgeordnet automatisierte Pufferbereiche für zur Kommissionierung bereitgestellter bzw. angeforderter Lagerbehälter vorgesehen. Dies ermöglicht eine Kommissionierung sogenannter Langsamläufer nach dem Prinzip Ware-zu-Mann und erhöht durch Einsparung durch den Kommissionierer zurückzulegender Wegstrecken, eine Erhöhung der Kommissionierleistung und ermöglicht eine ergonomische Arbeitsplatzgestaltung für den Kommissionierbereich.

Aufgabe der vorliegenden Erfindung ist es ein Warenumschlaglager zu schaffen, in dem eine parallele Wareneingangs- und Warenausgangsabwicklung bei hoher Umschlagsleistung, für in Behälter, insbesondere unterteilte Behälter, gelagerte Waren erreicht wird.

Diese Aufgabe der Erfindung wird dadurch erreicht, dass die Fördereinrichtungen des Wareneingangsbereiches und des Kommissionierbereiches als Endlosfördereinrichtungen ausgebildet sind, die über Transferfördermittel miteinander und mit den Ein- und Auslagermitteln transportverbunden sind und an den Fördereinrichtungen, mit der Steuer- und Überwachungseinrichtung kommunikationsverbunden, Erfassungsmittel z.B. Datenscanner für die Erfassung von Behälterdaten der Lager- und Transportbehälter, angeordnet sind. Der überraschende Vorteil dabei ist, dass durch die miteinander transportverbundenen und als Endlosförderer ausgebildeten Fördereinrichtungen im Wareneingangsbereich und Kommissionierbereich und einem permanent aktuellen Status der Behältersituation über im Behälter verfügbare Waren bzw. Artikeln und deren Bestand sowie der Lager- oder Förderposition der Behälter eine flexible Zuteilung zwischen den verschiedenen Bereichen des Umschlaglagers, insbesondere zwischen dem Wareneingangsbereich und dem Kommissionierbereich, erreicht wird, wodurch kurze Reaktionszeiten für die Bereitstellung von Behältern auf eine Anforderung durch den Kommissionierbereich für eine Auftragsabwicklung erzielt werden. Dies ermöglicht es ohne Unterbrechung oder Leistungsminderung des Kommissionierablaufes eine permanente Wareneingangsabwicklung im Parallelbetrieb zur Warenausgangsabwicklung durchzuführen.

Vorteilhaft ist dabei eine Ausbildung nach Anspruch 2, weil dadurch eine flexible Anpassung der Aufnahmekapazität für die Lager- und Transportbehälter an ein variierendes, vielfach im Tagesverlauf wechselndes Eingangsvolumen an Waren erreicht wird.

Vorteilhaft ist auch eine Ausbildung nach Anspruch 3, wodurch in der Zuteilung der Lager- und Transportbehälter kürzere Reaktionszeiten erreicht werden und damit diese, nach einer Anforderung, z.B. aus dem Kommissionierbereich, in rascher Abfolge verfügbar gestellt werden können und damit eine hohe Kommissionierleistung erzielt wird.

Durch die im Anspruch 4 gekennzeichnete Ausbildung wird eine höhere Auslastung der Lager- und Transportbehälter, d.h. höherer Befüllgrad, erreicht, durch den auch eine höhere Auslastung in den Lagerbereichen erreicht, und dadurch auch Lagervolumen eingespart wird. Des weiteren wird eine Streuung gleicher Artikelvarianten auf mehrere der Lager- und Transportbehälter und deren Einlagerung an unterschiedlichen Regalstellplätzen zur Erzielung einer gleichmäßigen Auslastung der Ein- und Auslagermittel und der Fördereinrichtung erreicht.

Möglich ist aber auch eine Ausbildung nach Anspruch 5, weil dadurch den unterschiedlichen Stückzahlaufkommen der umzuschlagenden Artikelvarianten Rechnung getragen wird.

Durch die im Anspruch 6 gekennzeichnete Lösung wird eine exakte Zuordnung von Artikel zu Lager- und Transportbehälter bzw. Aufnahmefächer erreicht und ist weiters die Ausrichtung des Lager- und Transportbehälters auf der Fördereinrichtung an den Arbeitsplätzen des Wareneingangbereiches und des Kommissionierbereiches erfassbar und somit eine automatisierte Kennung der für die Befüllung oder Entnahme vorgegebenen Aufnahmefächer, z.B. durch Lichtzeigereinrichtungen, anwendbar. Dadurch werden Fehlmanipulationen im Wareneingangsbereich wie auch im Kommissionierbereich weitestgehend vermieden.

Gemäß der im Anspruch 7 beschriebenen vorteilhaften Ausbildung wird ein direkter Abtransport von Kommissionsware in den Warenausgangsbereich erreicht.

Von Vorteil ist auch eine Ausbildung nach Anspruch 8, weil dadurch eine Kontroll- und Überwachungsfunktion unmittelbar in den Arbeitsplätzen erreicht wird.

Durch die im Anspruch 9 beschriebene vorteilhafte Ausbildung wird eine räumliche und zeitliche Entkoppelung der Endlosfördereinrichtungen des Wareneingangsbereiches und des Kommissionierbereiches erreicht.

Von Vorteil sind aber auch die Ausbildungen nach den Ansprüchen 10 bis 13, wodurch das Transportsystem in unterteilte Transportabschnitte für eine laufende Behälterüberwachung beispielsweise gesplittet wird und damit eine hohe Flexibilität in der Behälterzuteilung erreicht wird.

Die im Anspruch 14 gekennzeichnete Ausbildung ermöglicht mit den von der Artikelerfassung und aus diesen Artikeldaten bekannten Einzelgewichten, durch eine Kontrollwiegung eine laufende Plausibilitätsprüfung der von der Bedienungskraft beim Zulagem oder Entnehmen von Artikeln gemeldeten Stückzahlen, vorzunehmen, wodurch ein Manipulationsfehler unmittelbar und vor der Weitergabe des Transport- und Lagerbehälters oder des Auftragsbehälters angezeigt wird und Fehler sofort, und ohne weitere Störungen im Ablauf zu verursachen, behoben werden können.

Vorteilhaft ist weiters eine Ausbildung nach Anspruch 15, wodurch die vorzunehmende Manipulation der Bedienungskraft unmissverständlich angezeigt wird und eine Fehlmanipulation weitestgehend auszuschließen ist.

Schließlich ist aber auch eine Ausbildung nach Anspruch 16 vorteilhaft, wodurch dem Wareneingangsbereich bei Bedarf kurzfristig zusätzliche Lager- und Transportbehälter zur Verfügung stehen.

Aufgabe der Erfindung ist aber auch, Maßnahmen für den Betrieb eines Warenumschlaglagers anzugeben, durch die eine Wareneingangsbearbeitung ohne Unterbrechung und/oder Leistungsreduzierung der Kommissionierung des Warenausganges entsprechend dem Wareneingangsaufkommen erfolgen kann.

Diese Aufgabe der Erfindung wird durch die im Kennzeichenteil des Anspruch 17 wiedergegebenen Maßnahmen gelöst. Gemäß diesen ist vorgesehen, dass in der Rechner- und Datenspeichereinheit ein Warenausgangsauftrag nach Artikelvarianten erfasst wird und von der Lager-, Steuer- und Überwachungseinrichtung dem Kommissionierbereich bzw. einem Arbeitsplatz des Kommissionierbereiches, der die auftragsbezogene Ware enthaltende Lager- und Transportbehälter zur Bedarfsdeckung, bevorrangt aus dem Lagerbereich, oder bei einem Zusatzbedarf bei Unterdeckung aus dem Wareneingangsbereich etwa zeitgleich mit zumindest einem für den Warenausgangsauftrag indexierten Auftragsbehälter über die Fördereinrichtung, zugeführt. Der überraschende Vorteil dabei ist, dass zusätzlich zum hohen Anteil einer Disponierung von im Kommissionierbereich jeweils erforderlicher Ware aus dem Lagerbereich ein zusätzlicher Bedarf, beispielsweise durch eine Unterdeckung des Lagerbestandes, bei einem Bestand im Wareneingangsbereich durch direkte Zuteilung des entsprechenden Lager- und Transportbehälter abgedeckt werden kann. Weiter wird eine permanente und zur Warenausgangsabwicklung, insbesondere zum Kommissionierbetrieb, parallele Wareneingangsabwicklung erreicht, bzw. kann damit die dem Warenumschlaglager zuzuführende Eingangsware ohne zeitliche Verzögerung und ohne Beeinträchtigung der Auftragsabwicklung entsprechend dem Eingangsaufkommen, welches über den Tagesverlauf zeitlichen Schwankungen unterliegt, aufbereitet werden. Damit erhöht sich auch die Flexibilität in der Arbeitszeit- und Personalplanung durch eine verbesserte Anpassungsmöglichkeit des Personaleinsatzes, wie auch die Verfügbarkeit im Warenbestand gesteigert wird.

Vorteilhaft sind dabei Maßnahmen wie in den Ansprüchen 18 und 19 beschrieben, wodurch eine unmissverständliche Zuordnung Ware zu Auftrag erreicht wird und der Kommissioniervorgang wesentlich beschleunigt wird.

Durch die vorteilhaften Maßnahmen gemäß den Ansprüchen 20 bis 22, wird eine, Fehler in der Warenzuordnung weitestgehend unterbindende Bedienerführung erreicht, wodurch auch ein Personalaustausch zur Spitzenabdeckung in den verschiedenen Bereichen vereinfacht wird.

Die in den Ansprüchen 23 und 24 beschriebenen vorteilhaften Maßnahmen ermöglichen ein sofortiges Unterbrechen einer Wareneingangsbearbeitung bei Vorliegen einer Priorität aus dem Kommissionierbereich für eine bestimmte Ware, wobei durch die Maßnahmen der Zwischenerfassung eine sofortige Wiederaufnahme der Eingangsbearbeitung nach Beendigung des Kommissioniervorganges erfolgen kann und der entsprechende Lager- und Transportbehälter dem Wareneingangsbereich bzw. dem Arbeitsplatz wieder zugeht. Dieses rasche Reagieren auf eine Anforderung aus dem Kommissionierbereich ermöglicht es die Wareneingangsabwicklung permanent und parallel zur Warenausgangsabwicklung, ohne Leistungsminderung in der auftragsbezogenen Warenzuteilung, durchzuführen.

Von Vorteil sind aber auch die Maßnahmen nach den Ansprüchen 25 und 26 wodurch eine hohe Behälter- und damit Lagerauslastung erreicht wird, durch die ein äußerst wirtschaftliches Verhältnis zwischen bereitgestelltem Lagervolumen und umzuschlagenden Warenvolumen erzielt wird und damit insgesamt eine hohe Wirtschaftlichkeit des Warenumschlaglagers gegeben ist.

Die Maßnahmen nach Anspruch 27 gewährleisten eine laufende Überwachung des Warenumschlages und ermöglichen damit eine permanente Qualitätssicherung der Vorgänge und die erforderliche lückenlose Dokumentation.

Gemäß den im Anspruch 28 beschriebenen Maßnahmen wird die Verfügbarkeit der Lager- und Transportbehälter für eine Wareneingangsabwicklung, jedoch insbesondere im Hinblick auf eine rasche Verfügbarkeit für die Warenausgangsbearbeitung, erreicht und Belastungsspitzen für das Einlagern und Auslagern in den Lagerbereichen und den Ein- und Auslagermitteln vermieden.

Vorteilhaft sind auch Maßnahmen gemäß den Ansprüchen 29 und 30, wodurch eine kurze Verfügbarkeit für von den Arbeitsplätzen angeforderte Lager- und Transportbehälter für die Einlagerung oder die Entnahme von Waren erreicht wird.

Gemäß den im Anspruch 31 wiedergegebenen Maßnahmen werden wirkungsvoll Belastungsspitzen bei der Ein- und Auslagerung der Lager- und Transportbehälter in den Lagerbereichen, insbesondere aber auch bei den Ein- und Auslagermitteln, vermieden.

Durch die in den Ansprüchen 32 und 33 beschriebenen Maßnahmen wird eine hohe durchschnittliche Behälterauslastung erreicht.

Die im Anspruch 34 beschriebene Maßnahme gewährleistet auch bei einer förderbedingten Änderung der Behälterausrichtung eine exakte Zuordnung der Aufnahmefächer, wie sie für eine korrekte Anzeige der für das Einlegen und das Entnehmen zu bedienenden Aufnahmefächer mittels der Lichtzeigereinrichtungen an den Arbeitsplätzen erforderlich ist.

Schließlich ermöglichen die Maßnahmen, wie im Anspruch 35 wiedergegeben eine exakte Bedienerführung, durch welche eine Fehlmanipulation bei der Einlagerung der Ware in die Lager- und Transportbehälter bzw. Aufnahmefächer weitestgehend vermieden wird.

Zum besseren Verständnis der Erfindung wird diese anhand der in den nachfolgenden Figuren beschriebenen Beispielen näher erläutert.

Es zeigen:
- Fig. 1: ein erfindungsgemäßes Warenumschlaglager in eine vereinfachter Lay-out Darstellung;
- Fig. 2: eine schematische Darstellung des Warenumschlaglagers zur Erläuterung des erfindungsgemäßen Verfahrens;
- Fig. 3: eine schematische Darstellung eines Arbeitsplatzes des Wareneingangsbereiches des Warenumschlaglagers;
- Fig. 4: eine schematische Darstellung eines Arbeitsplatzes des Kommissionierbereiches des Warenumschlaglagers.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichanungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

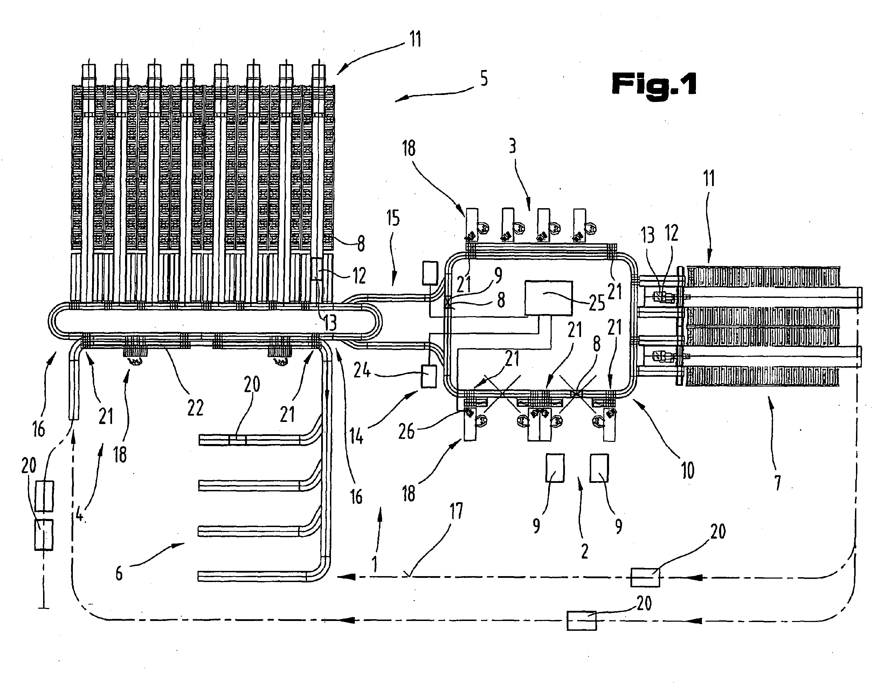

In der Fig. 1 ist ein Warenumschlaglager 1 mit den wesentlichen Bereichen, und zwar dem Wareneingangsbereich 2, mit dem aufgrund der umfangreicheren Eingangsabwicklung als eigenen Bereich angegliederten Retoureneingang 3, sowie dem Kommissionierbereich 4 mit zugeordneten Lagerbereich 5, sowie dem den Kommissionierbereich 4 nachgeordneten Warenausgangsbereich 6, gezeigt. Ein weiterer Lagerbereich 7 ist bevorzugt unmittelbar an den Wareneingangsbereich 2 angebunden.

Aus dem Lagerbereich 7 wird bevorzugt über nicht weiter dargestellte Kommissionierautomaten die Warenausgangsabwicklung vorgenommen und ist dieser Lagerbereich 7 für "schnelldrehende" Artikel ausgelegt. In dem unmittelbar dem Kommissionierbereich 4 angegliederten Lagerbereich 5 sind Artikel mit geringerer und mittlerer Umschlagshäufigkeit vorgesehen.

Die Zuordnung der Artikel in sogenannte "A", "B" und "C" - Artikel erfolgt über beispielsweise laufend durchgeführte Umschlagsanalyse, permanente Bestandsführung etc., wodurch die Zuordnung in eine der Kategorien, und damit den Lagerbereichen 5, 7 variabel ist.

Die Konzeption des Warenumschlaglagers 1, betreffend Lagereinrichtung und Fördereinrichtung, ist für einen Warenumschlag mittels Lager- und Transportbehälter 8 ausgelegt. Eingehende Waren 9 werden im Wareneingangsbereich 2 in die Lager- und Transportbehälter 8 eingelegt und mittels einer, die einzelne Bereiche verbindenden Fördereinrichtung 10 gefördert und den Lagerbereichen 5, 7 zur Einlagerung in Lagerregale 11 zugeführt oder direkt in den Kommissionierbereich 4 zur Kommissionierung von Warenorders gefördert.

Die Fördereinrichtung 10 kann beispielsweise als Bandförderer, Rollenbahnförderer, Plattenbandförderer etc. gebildet sein. Die Lagerregale 11 sind bevorzugt Hochregale, aber für bestimmte Warengruppen beispielsweise auch Durchlaufregale. Die Lagerregale werden vorzugsweise über zugeordneten Ein- und Auslagermitteln 12, wie beispielsweise Regalbediengeräte 13, bedient.

Die Fördereinrichtung 10 des Wareneingangsbereiches 2, mit dem diesen angegliederten Retourenbereich 3, ist als Endlosfördereinrichtung 14 ausgebildet, die über Transferfördermittel 15 mit der Fördereinrichtung des Kommissionierbereiches 4, die ebenfalls als Endlosfördereinrichtung 16 ausgebildet ist, transportverbunden.

Unabhängig von der Warendistribution der "B" - und "C"- Artikel über den Kommissionierbereich 4 ist der Lagerbereich 7 mit den schnell drehenden "A"- Artikeln an die Endlosfördereinrichtung 14 des Wareneingangsbereiches 2 für den Umschlag mit den Lager- und Transportbehältern 8 direkt angegliedert.

Aus dem Lagerbereich 7 erfolgt die Warendistribution, wie nicht weiters im Detail dargestellt, bevorzugt mittels Kommissionierautomaten in Auftragsbehälter, die im Falle von zuzukommissionierenden "B" und "C" - Artikel dem Kommissionierbereich 4, oder wenn dies nicht der Fall ist, auf direktem Förderweg dem Warenausgangsbereich 6 - gemäß Pfeil 17 - zugeführt werden. Im Wareneingangsbereich 2, Retourenbereich 3 und Kommissionierbereich 4 sind an den Endlosfördereinrichtungen 14, 16 Arbeitsplätze 18 für die Wareneingangsabwicklung sowie für die Kommissionierung in einer zur Umsetzung der für das Warenumschlaglager 1 vorgesehenen Abwicklungskapazität entsprechenden Anzahl vorgesehen, die aufgrund von bekannten Kapazitätskennzahlen bestimmt werden, wie auch aus diesen Kennzahlen die Größenordnung für die Lagerbereiche 5, 7 und die erforderliche Förderkapazität für die Fördereinrichtung 10, unter Zugrundelegung eines Warenumschlags mittels der Lager- und Transportbehälter 8 festzulegen ist.

Wie bereits darauf hingewiesen, ist das erfindungsgemäße Warenumschlaglager 1, insbesondere für Waren 9 mit kleinen bis mittleren Packungsgrößen vorgesehen, wobei eine mehr oder weniger große Bandbreite bei der Anzahl der Einzelpackungen entsprechend den Umschlagszahlen der Artikelvarianten besteht. Zur Erzielung höchst möglicher Umschlagszahlen und hohem Auslastungsfaktor in den Lagerbereichen 5, 7 werden, wie bereits vorhergehend erwähnt, bevorzugt aber nicht ausschließlich im Lagerbereich 7, für "A" - Artikel ungeteilte, im Lagerbereich 5 der "B" - und "C" - Artikel in Aufnahmefächer 19 vorzugsweise unterteile Lager- und Transportbehälter 8 eingesetzt. Bevorzugt weisen die unterteilen Lager- und Transportbehälter 8 zwei, drei, vier, sechs oder acht derartige Aufnahmefächer 19 für die differenzierte Aufnahme von Artikelvarianten auf. Selbstverständlich werden auch nicht unterteile Lager- und Transportbehälter 8 für in größeren Mengen oder Volumen umzuschlagende Waren 9 verwendet. Außerdem werden auch unterschiedlich hohe Lager- und Transportbehälter 8 verwendet und entsprechend verwendet um damit einen hohen Befüllungsgrad auch bei großvolumiger Ware 9 zu erreichen.

Auftragsbehälter 20, welche die aus dem Lagerbereich 7 bzw. von den Kommissionierautomaten auftragsbezogen kommissionierten "A" - Artikeln und im Kommissionierbereich 4 kommissionierten "B" - und "C" - Artikeln aufnehmen, sind vorzugsweise ungeteilt.

Die Arbeitsplätze 18 für die Wareneingangsabwicklung wie auch die Kommissionierung sind, wie noch später im Detail darauf eingegangen wird, entsprechend den speziellen Anforderungen ausgestattet. Bevorzugt sind in diesen Arbeitsplätzen 18 über Ein- und Ausschleusmittel 21 mit den Endlosfördereinrichtungen 14, 16 transportverbundene Nebenförderer 22 für die Lager- und Transportbehälter 8 und/oder Auftragsbehälter 20 vorgesehen.

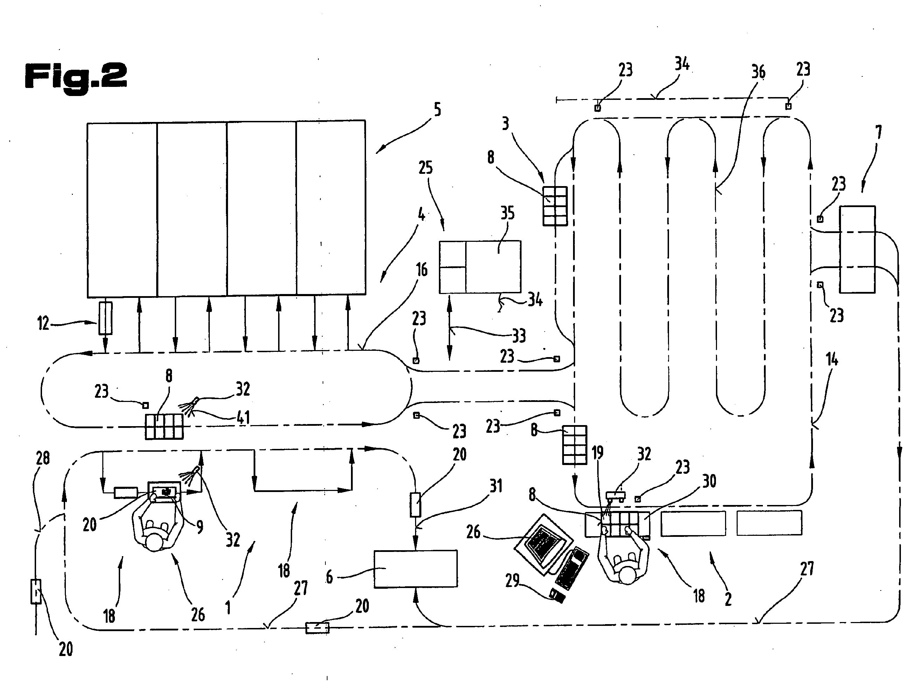

Eine Behälter-, Leit- und Erfassungseinrichtung wird durch eine Vielzahl an der Fördereinrichtung 10, insbesondere den Endlosfördereinrichtungen 14, 16, Transferfördermitteln 15, Ein- und Ausschleusmitteln 21 und Ein- und Auslagermitteln 12 angeordnete Erfassungsmittel 23 (Fig. 2), insbesondere Datenscanner 24 zur Erfassung von Behälterdaten, die eine unverwechselbare Kennung und Verfolgung der Lager- und Transportbehälter 8, mittels an diesen angebrachten Datensätzen, z.B. Barcode, elektronischer Datenträger etc., ermöglicht. Diese so erfassten Behälterdaten werden in zumindest einer, die gesamte Verwaltung des Waren- und Behälterumschlags durchführenden, zentralen Lager-, Steuer- und Überwachungseinrichtung 25 verwaltet und die bevorzugt mit dezentral vorgesehenen Daten Ein- und Ausgabevorrichtungen 26, die insbesondere bei den Arbeitsplätzen 18 vorgesehen sind, leitungsverbunden, oder über drahtlose Daten- und/oder Signalübertragung kommunizieren.

In der Fig. 2 ist in einer schematischen Darstellung der Wareneingangsbereich 2 mit der Endlosfördereinrichtung 14 und der Kommissionierbereich 4 mit der weiteren Endlosfördereinrichtung 16 und den an diese über die Fördereinrichtung 10 und die Ein- und Auslagermittel 12 angebundenen Lagerbereiche 5, 7 gezeigt.

Die Endlosfördereinrichtungen 14, 16 sind über die Transferfördermittel 15 verbunden, über die die Lager- und Transportbehälter 8 wahlweise bidirektional gefördert werden.

Der Lagerbereich 5, bestehend aus den Lagerregalen 11 ist über die Ein- und Auslagermittel 12 für den Behältertransfer mit der Endlosfördereinrichtung 16 des Kommissionierbereiches 4 transportverbunden. Wie bereits vorhergehend ausgeführt, sind sowohl in die Aufnahmefächer 19 unterteilte, wie auch nicht unterteilte Lager- und Transportbehälter 8 in Abhängigkeit von der Umschlagshäufigkeit der Artikelvarianten und des davon in gewissem Maße abhängigen Warenvolumens der jeweiligen Artikelvariante in Verwendung. Dabei ist es aber auch durchaus vorgesehen Artikelvarianten auf die häufig zugegriffen wird, auf mehrere der Lager- und Transportbehälter 8 aufzuteilen, weil dadurch Engpässe beim Zugriff weitestgehend vermieden werden, d.h. dass ein gleichzeitiger Zugriff auf eine Artikelvariante an mehreren der Arbeitsplätze 18 des Kommissionierbereiches 4 möglich ist.

Die Fertigstellung der auftragsbezogenen Kommissionierung der Ware 9 erfolgt am Arbeitsplatz 18 des Kommissionierbereiches 4 in die Auftragsbehälter 20, die mittels einer von der Endlosfördereinrichtung 14 unabhängigen Auftragsfördereinrichtung 27 den Arbeitsplätzen 18 zur Befüllung zugeführt und im fertig gestellten Zustand an den Warenausgangsbereich 6 zur Warenausgangsabwicklung, z.B. Lieferpapiererstellung, Verpackung, Adressierung, in den Warenausgangsbereich 6 gefördert werden.

Dabei ist zu unterscheiden, zwischen den Auftragsbehältern 20, welche den Arbeitsplätzen 18 des Kommissionierbereiches 4 im bereits teilkommissionierten, d.h. aus mit "A"- Artikel bereits teilbefülltem Zustand, aus dem Lagerbereich 7 zur weiteren Kommissionierung und Auffüllung mit "B"- und "C"- Artikel und damit zur Komplettierung eines Auftrages zugeführt werden bzw. leeren Auftragsbehältern 20 die bevorzugt aus einer dem Kommissionierbereich 4 bzw. den Arbeitsplätzen 18 vorgeordneten Behälterspeicherbahn 28 zugeführt werden.

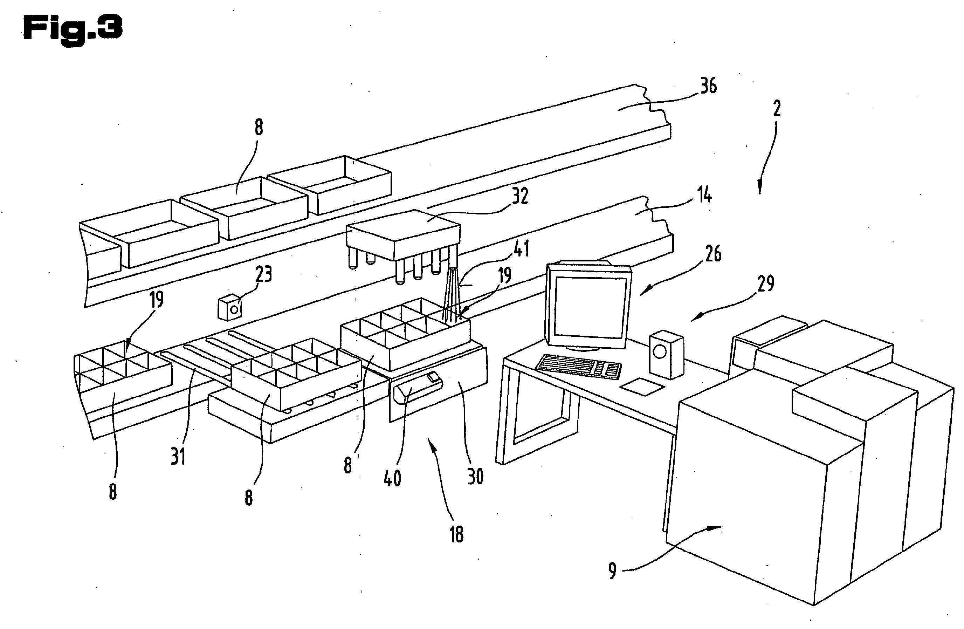

Anhand den Fig. 2 und 3 ist nun beispielhaft die Ausstattung und eine beispielsweise gewählte Anordnung der Ausstattung des Wareneingangsbereiches 2 am Beispiel eines der Arbeitsplätze 18 gezeigt. Diese Ausstattung besteht beispielsweise aus der Datenein- und Ausgabevorrichtung 26, einem Artikelscanner 29 zum Einlesen eines Artikelcodes der Eingangsware, sowie einer Waage 30 und einer Stückzahl- Anzeigeeinrichtung, die der Bedienkraft die in ein Aufnahmefach 19 zur optimalen Befüllung vorgegebene Stückzahl anzeigt.

Die Waage 30 dient für eine Kontrollwiegung um eine Gewichts-Plausibilitätsüberprüfung vorzunehmen, die durch Vergleich des bekannten Einzelgewicht der Ware 9 und der erfassten Stückzahl vorgenommen wird. Weiter ist ein Erfassungsmittel 23 zur Zuordnung bzw. Kontrolle des Lager- und Transportbehälters 8 durch Erfassung der Behälterdaten vorgesehen. Der Lager- und Transportbehälters 8 wird über eine Ausschleuseinrichtung 31 zur Befüllung bereitgestellt. Über eine Lichtzeigereinrichtung 32 erfolgt eine Bedienerführung, mittels der durch Ausleuchtung das Aufnahmefach 19 angezeigt wird in welches der erfasste Artikel der Ware 9 einzulegen ist. Die Stückzahl welche in welchen Lager- und Transportbehälter 8 bzw. Aufnahmefach 19 einzulegen ist, wird durch die Lager-, Steuer- und Überwachungseinrichtung 25 vorgegeben und am Arbeitsplatz 18 dem Bediener, wie bereits erwähnt, angezeigt. Nach dem erfolgten Einlegen der geforderten Stückzahl wird dies vom Bediener bestätigt und die Kontrollwiegung auf der Waage 30 vorgenommen. Bei Übereinstimmung des Ergebnisses wird der befüllte oder teilbefüllte Transport- und Lagerbehälter 8 an die Endlosfördereinrichtung 14 überstellt. Falls keine Übereinstimmung besteht wird eine Fehleranzeige aktiviert, womit eine sofortige Kontrolle erfolgen kann und somit eine sofortige Fehlerbehebung vorgenommen wird.

Diese Ausstattung des Arbeitsplatzes 18 im Wareneingangsbereich 2 gewährleistet eine unverwechselbare Zuordnung der Ware 9, einem oder mehreren, mittels der Behälterdaten zur Einlagerung der Ware 9 vorgesehenen Lager- und Transportbehälter 8 bzw. einem oder mehreren Aufnahmefächern 19. Die Datenübergabe bzw. Datenkommunikation - gemäß Doppelpfeil 33 - zwischen der Datenein- und Ausgabevorrichtung 26 erfolgt über eine Leitung (34) an die zentrale Lager-, Steuer- und Überwachungseinrichtung 25 bzw. einer Rechner- und Datenspeichereinrichtung 35, wie sie aber auch drahtlos erfolgen kann.

Wie auch noch dargestellt, ist die Endlosfördereinrichtung 14 des Wareneingangsbereiches 2 bevorzugt um eine bedarfsweise, in den Umlauf ein zu beziehende Speicherbahn 36 erweiterbar, z.B. zur Spitzenabdeckung im Wareneingangsbereich 2. Dabei ist auch eine Unterteilung in einzeln überwachbare und steuerbare Transportsektionen durch Anordnung mehrerer Erfassungsmittel 23 längs der Fördereinrichtung 10 möglich.

Wie der Fig. 2 weiter zu entnehmen, ist dem Wareneingangsbereich 2 und an die Endlosfördereinrichtung 14 angebunden, der separat gegliederte Retoureneingangsbereich 3. In diesem werden retour kommende Waren 9 bzw. Artikel entgegengenommen, auf Übereinstimmung mit der ursprünglichen Auslieferung und auf einwandfreiem Zustand hin überprüft und wenn der Entgegennahme keine Fakten entgegenstehen, erfasst und in weiterer Folge wie ein üblicher Wareneingang behandelt, d.h. auch in diesem Fall wird ein für den Artikel definierter Lager- und Transportbehälter 8 bereitgestellt, die eingelegte Stückzahl bestätigt, womit diese Retouren in den üblichen Warenumlauf einbezogen werden.

Dem Wareneingangsbereich ist, wie insbesondere der Fig. 3 zu entnehmen, eine weitere Speicherbahn 36 für die Zufuhr bevorzugt ungeteilter Lager- und Transportbehälter 8 zugeordnet, die bei Bedarf, d.h. bei Eingang größerer Mengen eines bestimmten Artikels der Bedienkraft im Wareneingangsbereich 2 zur Verfügung stehen und manuell von der Speicherbahn 36 entnommen und nach Erfassung der Behälterdaten dem Transportfluss auf der Endlosfördereinrichtung 14 zugeordnet werden.

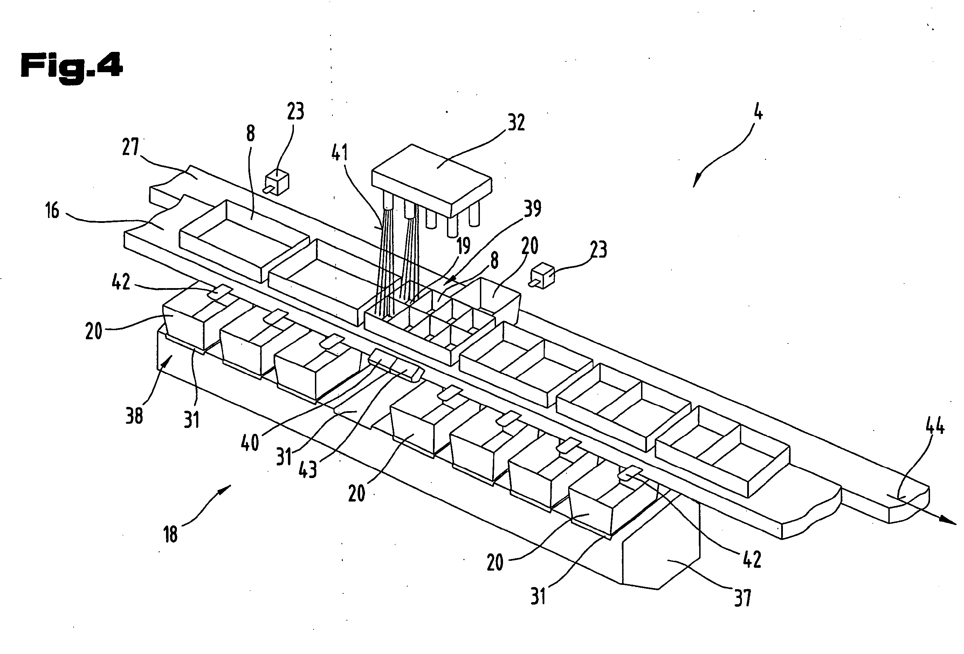

Anhand den Fig. 2 und 4 ist nun beispielhaft die Ausstattung und eine beispielsweise gewählte Anordnung der Ausstattung des Kommissionierbereiches 4 mit einem der Arbeitsplätze 18 gezeigt. Dieser weist ein sich längs der Auftragsfördereinrichtung 27 erstreckendes Arbeitspult 37 auf, auf dem nebeneinander gereiht mehrere Stellplätze 38 für Auftragsbehälter 20 - bevorzugt bis etwa acht -, zur Aufnahme der auftragsbezogenen Ware 9 vorgesehen sind. Diese werden über jedem Stellplatz 38 zugeordneter Ausschleuseinrichtung 31 nach Auftragszuordnung und Erfassung der Behälterdaten durch das Erfassungsmittel 23 automatisiert von der Auftragsfördereinrichtung 27 auf den Stellplatz 38 am Arbeitspult 37 überstellt, womit eine exakte Zuordnung zu einem Auftrag bzw. auftragsbezogener und zu kommissionierende Ware 9 vorliegt. Bei den Auflragsbehältern 20 kann es sich dabei sowohl um bereits teilweise mit Waren 9 der "A" - Artikel teilbefüllte handeln, die mit Waren 9 der "B" und/oder "C" - Artikel aufzufüllen sind oder aber um leere Auftragsbehälter 20, falls der Auftrag nur diese Artikel umfasst. Die Mehrzahl werden jedoch die bereits teilweise befüllten und aus dem Lagerbereich 7 an den Kommissionierbereich 4 überstellte Auftragsbehälter 20 darstellen.

Nahezu zeitsynchron mit der Zuteilung des Auftragsbehälters 20 für einen Auftrag wird von der Lager-, Steuer- und Überwachungseinrichtung 25 ein oder mehrere Lager- oder Transportbehälter 8, mit den für den jeweiligen Auftrag beeinhaltenden Waren 9, auf der bevorzugt etwas oberhalb des Arbeitspults 37 und parallel zu diesem verlaufenden Endlosfordereinrichtung 16 zugeführt und auf einem Kommissionierstellplatz 39 positioniert. Darüber ist eine Lichtzeigereinrichtung 32, wie auch im Wareneingangsbereich 2 bereits erwähnt, angeordnet.

Von der Lager-, Steuer- und Überwachungseinrichtung 25 erfolgt nun die Signalisierung an den Arbeitsplatz 18 bzw. an die dort tätige Kommissionierperson durch Anzeige der Stückzahl auf einem Anzeigemittel 40, die dem Lager- und Transportbehälter 8 bzw. einem bestimmten Aufnahmefach 19 zu entnehmen ist, wobei der Lager- und Transportbehälter 8 bzw. das Aufnahmefach 19 mittels der Lichtzeigereinrichtung 32 be- bzw. ausgeleuchtet wird. Gleichzeitig wird der für Aufnahme dieser Artikel definierte und auf einem der Stellplätze 38 abgestellte Auftragsbehälter 20, von einem Lichtstrahl 41 einer jedem Stellplatz 38 zugeordneten Lichtquelle 42 optisch angezeigt. Aufgabe der Kommissionierperson ist nunmehr die angezeigte Anzahl von Artikeln dem Lager- und Transportbehälter 8 bzw. dem Aufnahmefach 19 zu entnehmen und in den durch die Lichtquelle 42 kenntlich gemachten Auftragsbehälter 20 einzulegen und die Durchführung des Vorganges an die Lager-, Steuer- und Überwachungseinrichtung 25 durch Betätigung einer, mit dieser kommunikationsverbundenen Meldetaste 43 rückzumelden. Nach erfolgter Überprüfung in der Rechner- und Datenspeichereinrichtung 35 und Feststellung, dass damit die auftragsgemäße Fertigstellung der Kommission erreicht ist, wird der Auftragsbehälter 20 automatisch über die Ausschleuseinrichtung 31 an die Auftragsfördereinrichtung 27 überstellt. Falls in den Auftragsbehälter 20 noch weitere Waren 9 aus anderen Lager- und Transportbehältern 8 bzw. Aufnahmefächern 19 einzulegen sind, wird der zuvor beschriebene Vorgang wiederholt.

Durch die Anzahl der am Arbeitspult 37 vorgesehenen Stellplätze 38, bevorzugt wie bereits erwähnt bis etwa acht, wird eine Flexibilität bei der zeitsynchronen Zusammenführung der Lager- und Transportbehälter 8 und zugeordneter Auftragsbehälter 20 erreicht. Die fertig kommissionierten Auftragsbehälter 20 werden infolge nach deren Überstellung an die Auftragsfördereinrichtung 27 dem Warenausgangsbereich 6 - gemäß Pfeil 44 - zugefördert.

Nachfolgend wird anhand einer vereinfachten Ablaufbeschreibung Maßnahmen des Warenumschlages getrennt nach Wareneingang und Warenausgang, beispielhaft für eine mögliche Verfahrensvariante, und ohne Anspruch auf Vollständigkeit, aufgelistet.

### Beispiel Wareneingang:

- Eingangsware identifizieren nach Lieferpapiere - Erfassung in der Datenein- und Ausgabevorrichtung 26 am Arbeitsplatz 18 des Wareneingangsbereiches 2, Daten an Lager-, Steuer- und Überwachungseinrichtung 25 - Abgleich mit Bestelldaten;
- Erfassung der Artikeldaten mittels Artikelscanner 29, Zuordnung und Bereitstellung von Lager- und Transportbehälter 8 entsprechend den Artikeldaten und der einzulagernden Stückzahl, bereits artikelbezogener Lager- und Transportbehälter 8,
   a) aus dem Umlauf im Wareneingang;
   b) aus dem Umlauf im Koivrnissionierbereich,
   c) aus den Lagerbereichen 5, 7;
- Bereitstellung leerer Lager- und Transportbehälter 8 und Zuordnung Behälter- /Artikeldaten;
- Anzeige der in bereitgestellten Lager- und Transportbehältern 8 einzulegenden Stückzahl je Artikel;
- Anzeige des bezogenen Lager- und Transportbehälters 8, bzw. Aufnahmefaches 19 mittels Bedienerführung durch z.B. Lichtzeigereinrichtung 32;
- Permanenter Prioritätszugriff durch den Kommissionierbereich z.B. - Abbruch des Einlegevorgangs bei Eingang eines Prioritätssignals z.B. Lichtsignal - Ist- Stückzahl Erfassung - Kontrollwiegung auf Waage 30, Gewichts- Plausibilitätsprüfung - Behälterfreigabe;
- Befüllung der Lager- und Transportbehälter 8, bzw. von Aufnahmefächern 19 über Bedienführung durch Lichtzeigereinrichtung 32 für den zu befüllenden Lager- und Transportbehälter 8 bzw. des Aufnahmefaches oder der Aufnahmefächer 19 auf Waage 30;
- Bestätigung der zugelagerten Stückzahl durch Mengeneingabe am Erfassungsterminal der Waage 30 oder der Daten -, Ein- und Ausgabevorrichtung 26;
- Gewichts-/Plausibilitätsprüfung durch Rechner 35 der Lager-, Steuer- und Überwachungseinrichtung 25 oder externe Rechner der Datenein- und Ausgabevorrichtung 26;
- Vorgang erfolgreich abgeschlossen, Freigabe zur:
   a) Zuführung voller oder teilgefüllter Lager- und Transportbehälter 8 an Lagerbereiche 5 für "B" und "C" - Artikel (mittelschnell und langsamdrehend) und chaotische Einlagerung mit Belegung unterschiedlicher Lagerplätze nach Zugriffs- und Mengenkennzahlen;
   b) Zuführung an den Lagerbereich 7 für "A"- Artikel (schnelldrehend);
   c) Transferförderung an Endlosfördereinrichtung 16 des Kommissionierbereiches 4.

### Beispiel Warenausgang:

- Auftragszuteilung an Kommissionierbereich 4 - Lager-, Steuer- und Überwachungseinrichtung 25;
- nahezu zeitsynchrone Zusammenführung auf Arbeitsplatz 18 des Kommissionierbereiches 4 von Auftragsbehälter 20,
   a) aus Lagerbereich 7 - "A" - Artikel, vorkommissioniert,
   b) aus Behälterspeicherbahn 28, leere, neu indexierte,
- mit Lager- und Transportbehälter 8 mit auftragsbezogenen Waren 9,
   a) aus Lagerbereich 5, "B" und "C" - Artikel,
   b) aus Umlauf im Wareneingang 2 - Endlosfördereinrichtung 14,
   c) aus Speicherbahn 36 im Wareneingang,
   d) aus Umlauf im Kommissionierbereich 4 - Endlosfördereinrichtung 16;
- Überstellung des Auftragsbehälters 20 von Auftragsfördereinrichtung 27 auf Stellplatz 38 am Arbeitsplatz 18 des Kommissionierbereiches 4;
- Parken des Lager- und Transportbehälters 8 auf Kommissionierstellplatz 39;
- Signalisierung/Anzeige Entnahmestückzahl,
- Lichtsignalisierung Lager- und Transportbehälter 8, bzw. Aufnahmefach 19 zur Warenentnahme - z.B. Lichtzeigereinrichtung 32,
- Anzeige Auftragsbehälter 20 zur Befüllung mit Ware - z.B. Lichtquelle;
- Stückzahl Bestätigung - z.B. Meldetaste 43;
- Ablieferung des Auftragsbehälters 20 - Auftragsfördereinrichtung 27 an den Warenausgangsbereich 6;
- Weiterleitung des Lager- und Transportbehälters 8 an,
   a) Wareneingangsbereich,
   b) weiteren Arbeitsplatz im Kommissionierbereich,
   c) in den Lagerbereich 5 - "B" und "C" - Artikel - chaotisch Einlagerung,
   d) weiteren Arbeitsplatz 30 des Kommissionierbereiches 4;

Die Ausführungsbeispiele zeigen mögliche Ausführungsvarianten des Umschlaglagers 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus des Warenumschlaglagers 1 dieses bzw. dessen Bestandteile schematisiert und teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3, 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Warenumschlaglager
- 2: Wareneingangsbereich
- 3: Retourenbereich
- 4: Kommissionierbereich
- 5: Lagerbereich

- 6: Warenausgangsbereich
- 7: Lagerbereich
- 8: Lager- und Transportbehälter
- 9: Ware
- 10: Fördereinrichtung

- 11: Lagerregal
- 12: Ein- und Auslagermittel
- 13: Regalbediengerät
- 14: Endlosfördereinrichtung
- 15: Transferfördermittel

- 16: Endlosfördereinrichtung
- 17: Pfeil
- 18: Arbeitsplatz
- 19: Aufnahmefach
- 20: Auftragsbehälter

- 21: Ein- und Ausschleusmittel
- 22: Nebenförderer
- 23: Erfassungsmittel
- 24: Datenscanner
- 25: Lager-, Steuer- und Überwachungseinrichtung

- 26: Datenein- und Ausgabevorrichtung
- 27: Auftragsfördereinrichtung
- 28: Behälterspeicherbahn
- 29: Artikelscanner
- 30: Waage

- 31: Ausschleuseinrichtung
- 32: Lichtzeigereinrichtung
- 33: Doppelpfeil
- 34: Leitung
- 35: Rechner- und Datenspeicher

- 36: Speicherbahn
- 37: Arbeitspult
- 38: Stellplatz
- 39: Kommissionierstellplatz
- 40: Anzeigemittel

- 41: Lichtstrahl
- 42: Lichtquelle
- 43: Meldetaste
- 44: Pfeil

## Patentansprüche

1. Warenumschlaglager (I) für, in bevorzugt unterteilten Lager- und Transportbehälter (8), zu handhabende Waren (9), mit zumindest zwei Lagerbereichen (5,7) für Warengruppen mit unterschiedlicher Umschlagshäufigkeit und mit einem Wareneingangsbereich (2) und mit zumindest einem Kommissionierbereich (4) und mit Fördereinrichtungen (10) im Wareneingangsbereich (2) und Kommissionierbereich (4) und den Lagerbereichen (5,7) z.B. Bandförderer, Rollenbahnförderer, und mit Ein- und Auslagermittel (12) bevorzugt Regalbediengeräten zur Ein- und Auslagerung der Lager- und/oder Transportbehälter (8) in bzw. aus Lagereinrichtungen, z.B. Hochregal, Durchlaufregallager, und mit einer Lager- Steuer- und Überwachungseinrichtung (25), die mit Ein- und Ausgabevorrichtungen (26) an Arbeitsplätzen (18) kommunikationsverbunden ist und an den Fördereinrichtungen (10), mit der Lager- und Steuer- und Überwachungseinrichtung (25) kominunikationsverbunden, Erfassungsmittel (23), z.B. Datenscanner ( 24) für die Erfassung von Behälterdaten der Lager- und Transportbehälter (8) angeordnet sind, **dadurch gekennzeichnet, dass** die Fördereinrichtung (10) des Wareneingangsbereiches (2) als Endlosfördereinrichtung (14) und die des Kommissionierbereiches (4) ebenfalls als Endlosfördereinrichtung (16) ausgebildet ist die über Transferfördermittel (15) miteinander und mit den Ein- und Auslegermitteln (12) transportverbünden sind.

2. Warenumschlaglager (I) nach Anspruch 1, **dadurch gekennzeichnet, dass** die Endlosfördereinrichtung (14) des Wareneingangsbereiches (2) mit einer Speicherbahn (36) transportverbunden ist.

3. Warenumschlaglager (I) nach Anspruch 1 oder 2, **dadurch gekennzeichnet, dass** die Endlosfördereinrichtung (14) und/oder die Speicherbahn (36) und/oder die Endlosfördereinrichtung in, durch eine Mehrzahl von längs einer Förderrichtung vorgesehenen Erfassungsmitteln (23), überwachte Transportsektionen unterteilt ist.

4. Warenumschlaglager (1) nach Anspruch 1, **dadurch gekennzeichnet, dass** die Lager- und Transportbehälter (8) bevorzugt in Aufnahmefächer (19) unterteilt sind.

5. Warenumschlaglager (1) nach Anspruch 4, **dadurch gekennzeichnet, dass** die Lager- und Transportbehälter (8) beispielsweise zwei, oder vier, oder sechs, oder acht der Aufnahmefächer (19) aufweisen.

6. Warenumschlaglager (1) nach einem der vorhergehenden Ansprüche, **dadurch gekennzeichnet dass** am Lager- und Transportbehälter (8) zumindest ein, mehrere Daten umfassendes Kennzeichnungsfeld z.B. Strichcodefeld, Magnetstreifen, elektronischer Datenträger etc. vorgesehen ist.

7. Warenumschlaglager (I) nach einem der vorhergehenden Ansprüchen, **dadurch gekennzeichnet, dass** der Kommissionierbereich (4) durch eine Auftragsfördereinrichtung (27) mit dem Warenausgangsbereich (6) zur Bereitstellung des Warenausganges transportverbunden ist.

8. Warenumschlaglager (1) nach einem der vorhergehenden Ansprüchen, **dadurch gekennzeichnet, dass** im Wareneingangsbereich (2) und im Kommissionierbereich (4) jeweils mehrere mit Daten- Ein- und Ausgabevorrichtungen (26) versehene Arbeitsplätze (18) angeordnet sind.

9. Warenumschlaglager (I) nach einem der vorhergehenden Ansprüchen, **dadurch gekennzeichnet, dass** an den Arbeitsplätzen (18) mit den Endlosfördereinrichtungen (14, 16) über Ein- und Ausschleusmittel (21) transportverbundene Nebenförderer (22) angeordnet sind.

10. Warenumschlaglager (1) nach einem der vorhergehenden Ansprüchen, **dadurch gekennzeichnet, dass** an den Ein- und Ausschleusmitteln (21) die Erfassungsmittel (23) für die Erfassung der Behälterdaten angeordnet sind.

11. Warenumschlaglager (1) nach einem der vorhergehenden Ansprüchen, **dadurch gekennzeichnet, dass** an den Ein- und Auslagermitteln (12) die Erfassungsmittel (23) für die Erfassung der Behälterdaten angeordnet sind.

12. Warenumschlaglager (1) nach einem der vorhergehenden Ansprüchen, **dadurch gekennzeichnet, dass** an den Arbeitsplätzen (18) in ihrer Position am Nebenförderer (22) oder einem Arbeitspult (37) vorgegebene Stellplätze (38) für die Warenmanipulation in oder aus den Lager- und/oder Transportbehälter(n) (8) vorgesehen sind.

13. Warenumschlaglager (1) nach einem der vorhergehenden Ansprüchen, **dadurch gekennzeichnet, dass** an den Stellplätzen (38) die Erfassungsmittel (23) für die Erfassung der Behälterdaten angeordnet sind.

14. Warenumschlaglager (1) nach einem der vorhergehenden Ansprüchen, **dadurch gekennzeichnet, dass** an zumindest am Arbeitsplatz (18) des Wareneingangsbereiches (2) eine Waage (30) für eine Kontrollwiegung der Lager- u/o Transportbehälter (8) angeordnet ist.

15. Warenumschlaglager (I) nach einem der vorhergehenden Ansprüchen, **dadurch gekennzeichnet, dass** an den Stellplätzen (38) und/oder einem Kommissionierstellplatz (39) Lichtquellen (42) und/oder Lichtzeigereinrichtungen (32) mit entsprechend einer maximalen Anzahl der Aufnahmefächer (19) der Lager- und Transportbehälter (8) vorgesehenen Lichtquellen (42) angeordnet sind.

16. Warenumschlaglager (I) nach einem der vorhergehenden Ansprüchen, **dadurch gekennzeichnet, dass** mit der Fördereinrichtung (10) eine oder mehrere Behälterspeicherbahnen (28) für die Zufuhr von leeren Lager- u/o Transportbehältern (8) transportverbunden ist bzw. sind.

17. Verfahren zum Betrieb eines Warenumschlaglagers für insbesondere in Aufnahmefächer (19) unterteilte Lager- und Transportbehälter (8) bevorzugt für Waren (9) in Kleinpackungen von Artikeln, mit einem Lagerbereich (7) für sogenannte schnelldrehende Waren (9) und einem Lagerbereich (5) für mittel- und langsamdrehende Waren (9), und mit einem Wareneingangsbereich (2), einem Kommissionierbereich (4), einem Warenausgangsbereich (6) und mit Fördereinrichtungen (10) und Ein- und Auslagermitteln (12) und einer Lager-, Steuer- und Überwachungseinrichtung (25) mit einer Rechner- und Speichereinheit (35) und externen Datenein- und Ausgabevorrichtungen (26) und Erfassungsmitteln (23) für Artikel- und Behälterdaten, **dadurch gekennzeichnet, dass** in der Rechner- und Datenspeichereinheit (35) ein Warenausgangsauftrag nach Artikelvarianten erfasst wird und von der Lager-, Steuer- und Überwachungseinrichtung (25) dem Kommissionierbereich (4) bzw. einem Arbeitsplatz (18) des Kommissionierbereiches (4) der die auftragsbezogenen Ware (9) enthaltende Lager- und Transportbehälter (8) zur Bedarfsabdeckung bevorrangt aus dem Lagerbereich (5) oder bei einem Zusatzbedarf bei Unterdeckung aus dem Wareneingangsbereich (2) etwa zeitgleich mit zumindest einem für den Warenausgangsauftrag indexierten Auftragsbehälter (20) über die Fördereinrichtung (10) zugeleitet werden.

18. Verfahren nach Anspruch 17, **dadurch gekennzeichnet, dass** der Auftragsbehälter (20) einem Arbeitsplatz (18) des Kommissionierbereiches (4) zugeordnet und aus der Endlosfördereinrichtung (16) ausgeschleust, mit seinen Behälterdaten einem Kommissionierauftrag zugeordnet und auf einem Stellplatz (3 8) geparkt wird.

19. Verfahren nach Anspruch 17 oder 18, **dadurch gekennzeichnet, dass** der Lager- und Transportbehälter (8) etwa zeitgleich mit der Bereitstellung des Auftragsbehälter (20) auf einem Kommissionierstellplatz (39) der Endlosfördereinrichtung (16) bzw. einem Nebenförderer (22) zur Warenentnahme bereit gestellt ist.

20. Verfahren nach einem der Ansprüche 17 bis 19, **dadurch gekennzeichnet, dass** zur Warenentnahme am Kommissionierstellplatz (39) die, die zu entnehmende Ware (9) enthaltenden Aufnahmefächer (19) mittels Lichtstrahlen (41) be- oder ausgeleuchtet werden und der zugeordnete Auftragsbehälter (20) am Stellplatz (38) des Arbeitsplatzes (18) bevorzugt mittels einer Lichtquelle (42) **gekennzeichnet** wird.

21. Verfahren nach einem der Ansprüche 17 bis 20, **dadurch gekennzeichnet, dass** auf einem Anzeigemittel (40) am Arbeitsplatz (18) die in den Auftragsbehälter (20) zuzuordnende Stückzahl der Ware (9) angezeigt wird.

22. Verfahren nach einem der Ansprüche 17 bis 21, **dadurch gekennzeichnet, dass** nach einer Bestätigungsmeldung der zur Zuordnung vorgegebenen Stückzahl der Auftragsbehälter (20) durch die Ausschleuseinrichtung (31) der Auftragsfördereinrichtung (27) zugeführt wird.

23. Verfahren nach Anspruch 17, **dadurch gekennzeichnet, dass** nach einer Eingangskontrolle und Erfassung von Artikelcodes, z. B. durch Einlesung mittels Scanner (29) eine Zuordnung und Bereitstellung von Lager- und Transportbehälter (8) entsprechend einer vom Rechner- und Datenspeicher (35) vorgegebenen Befüllmenge und Artikelveiteilung an einem Arbeitsplatz (18) des Wareneingangsbereiches erfolgt und während des Einlegevorganges am Arbeitsplatz (18) eine Prioritätsüberwachung auf Anforderung eines Transport- und Lagerbehälters (8) vom Rechner- und Datenspeicher (35) für den Kommissionierbereich (4) für eine Entnahme von Waren (9) zur eine auftragsbezogenen Kommissionierung erfolgt und bei Vorliegen einer Anforderung der Einlegevorgang mit Erfassung der Warenmenge und einer Gewichts-Plausibilitätsprüfung durch einen Wiegevorgang auf einer Waage (30) unterbrochen und der Lager- und Transportbehälter (8) über Transferfördermittel (15) von der Endlosfördereinrichtung (14) des Wareneingangsbereiches (2) an die Endlosfördereinrichtung (16) des Kommissionierbereiches (4) und einem Kommissionierstellplatz (39) zugeführt wird.

24. Verfahren nach Anspruch 23, **dadurch gekennzeichnet, dass** am Arbeitsplatz (18) des Wareneinganges an einem Anzeigemittel (40) die in den Lager- und Transportbehälter (8), bzw. einem Aufnahmefach (19) einzulegende Stückzahl der Ware (9) angezeigt wird und nach Beendigung oder einer Unterbrechung des Vorganges eine Bestätigung in der Datenein- und Ausgabevorrichtung (26) oder der Waage (30) durchgeführt wird.

25. Verfahren nach Anspruch 24, **dadurch gekennzeichnet, dass** die Befüllmenge an Ware (9) von der Rechner- und Datenspeichereinheit (35) nach Warenvolumen und Aufnahmevolumen vorgegeben ist.

26. Verfahren nach Anspruch 24, **dadurch gekennzeichnet, dass** die Befüllmenge je Artikelvariante und Lager- und Transportbehälter (8), bzw. Aufnahmefach (19) entsprechend der Umschlagszahl der Artikelvariante, zur Erreichung einer Zugriffsstreuung, bestimmt wird.

27. Verfahren nach einem der Ansprüche 23 bis 26, **dadurch gekennzeichnet, dass** nach Bestätigung der Befüllmenge eine Kontrollwiegung auf der Waage (30) und die Gewichts-Plausibilitätsprüfung in der Rechner- und Datenspeichereinheit (35) erfolgt und darnach der Lager- und Transportbehälter (8) an die Endlosfördereinrichtung (14) des Wareneingangsbereiches (2) überstellt wird.

28. Verfahren nach einem der Ansprüche 23 bis 27, **dadurch gekennzeichnet, dass** die befüllen oder teilbefüllten Lager- und Transportbehälter (8) in den Lagerbereichen (5,7) chaotisch, jedoch entsprechend der Zugriffshäufigkeit zur Erzielung möglichst gleichmäßiger Auslastung der Fördereinrichtung (10) und/oder der Ein- und Auslagermittel (12) eingelagert werden.

29. Verfahren nach Anspruch 17, **dadurch gekennzeichnet, dass** ein Anteil von einer Aufnahmekapazität der Endlosfördereinrichtung (14, 16) des Wareneingangsbereiches (2) und/ oder des Kommissionierbereiches (4) für die Lager- und Transportbehälter (8) als Pufferspeicher verwaltet wird.

30. Verfahren nach Anspruch 29, **dadurch gekennzeichnet, dass** der eine Speicherkapazität bildende Anteil an der Aufnahmekapazität der Umlauffördereinrichtungen (14, 16) mit Lager- und Transportbehälter (8) bzw. Warenvarianten nach Umschlagshäufigkeit und/oder Umschlagsmengen belegt wird.

31. Verfahren nach einem der Ansprüche 17 bis 30, **dadurch gekennzeichnet, dass** Lager- und Transportbehälter (8) mit gleichen Warenvarianten in dem der Warengruppe entsprechenden Lagerbereich (5, 7) bevorzugt auf mehrere Lagerregale (11) verteilt eingelagert werden.

32. Verfahren nach einem der Ansprüche 17 bis 31, **dadurch gekennzeichnet, dass** Warenvarianten dem Lager- und Transportbehälter (8) bzw. dem Aufnahmefach (19) frei zuordenbar sind.

33. Verfahren nach einem der Ansprüche 17 bis 32, **dadurch gekennzeichnet, dass** in den Behälterdaten die Information über Anzahl der Aufnahmefächer (19) enthalten und damit die Aufnahmekapazität für die Ware (9) bestimmt ist.

34. Verfahren nach einem der Ansprüche 17 bis 33, **dadurch gekennzeichnet, dass** in den Behälterdaten die Information über die Ausrichtung der Lager- und Transportbehälter (8) am Stellplatz (38) und/oder am Kommissionierstellplatz (39) enthalten ist.

35. Verfahren nach einem der Ansprüche 17 bis 34, **dadurch gekennzeichnet, dass** zur Beschickung der Lager- und Transportbehälter (8) nach Eingangserfassung der Ware (9) durch Eingabe oder Einlesung der Warendaten am Artikelscanner (29) und Bereitstellung des Lager- und Transportbehälters (8) am Stellplatz (38) bzw. der Waage (30) bzw. ein für das Beschicken mit der Ware (9) vorgegebenes Aufnahmefach (19) mittels Lichtstrahl (41) **gekennzeichnet** wird.

## Claims

1. Warehouse (1) for transferring goods, for articles (9) to be handled in preferably compartmentalised storage and transport containers (8), with at least two storage areas (5, 7) for groups of articles which are turned around with different frequencies and with an incoming goods area (2) and at least one consignment area (4), and having conveyor systems (10) in the incoming goods area (2) and consignment area (4) and storage areas (5, 7), e.g. belt conveyors, roller conveyors, and with loading and unloading means (12) of what are preferably shelf stacking devices for loading and unloading the storage and/or transport containers (8) in or out of storage systems, e.g. vertical shelf and continuous shelf storage systems, and with a storage, control and monitoring system (25) which is connected to input and output devices (26) at work stations (18) in order to communicate with them, and detection means (23), e.g. data scanners (24), communicating with the storage, control and monitoring system (25) are provided on the conveyor systems (10) for detecting container data of the storage and transport containers (8), **characterised in that** the conveyor system (10) of the incoming goods area (2) is an endless conveyor system (14) and that of the consignment area (4) is likewise an endless conveyor system (16), which are connected to one another and to the loading and unloading means (12) via transfer conveyor means (15).

2. Warehouse (1) for transferring goods as claimed in claim 1, **characterised in that** the endless conveyor system (14) of the incoming goods area (2) is connected to a storage line (36) for transport purposes.

3. Warehouse (1) for transferring goods as claimed in claim 1 or 2, **characterised in that** the endless conveyor system (14) and/or the storage line (36) and/or the endless conveyor system (16) is sub-divided into transport sections monitored by a plurality of detection means (23) disposed along a conveying direction.

4. Warehouse (1) for transferring goods as claimed in claim 1, **characterised in that** the storage and transport containers (8) are preferably sub-divided into compartments (19).

5. Warehouse (1) for transferring goods as claimed in claim 4, **characterised in that** the storage and transport containers (8) have two or four or six or eight compartments (19), for example.

6. Warehouse (1) for transferring goods as claimed in one of the preceding claims, **characterised in that** at least one code field incorporating a quantity of data, e.g. a bar code field, magnetic stripe, electronic data tag, etc., is provided on the storage and transport container (8).

7. Warehouse (1) for transferring goods as claimed in one of the preceding claims, **characterised in that** the consignment area (4) is connected to the outgoing goods area (6) via an order conveyor system (27) for transport purposes in order to prepare for despatch of the articles.

8. Warehouse (1) for transferring goods as claimed in one of the preceding claims, **characterised in that** several work stations (18) each with several data input and output devices (26) are disposed in the incoming goods area (2) and in the consignment area (4).

9. Warehouse (1) for transferring goods as claimed in one of the preceding claims, **characterised in that** secondary conveyors (22) are connected to the endless conveyor systems (14, 16) for transport purposes at the work stations (18) by means of gating-in and gating-out means (21).

10. Warehouse (1) for transferring goods as claimed in one of the preceding claims, **characterised in that** the detection means (23) for detecting the container data are disposed at the gating-in and gating-out means (21).

11. Warehouse (1) for transferring goods as claimed in one of the preceding claims, **characterised in that** the detection means (23) for detecting the container data are disposed on the loading and unloading means (12).

12. Warehouse (1) as claimed in one of the preceding claims, **characterised in that** specific positions (38) for manipulating the goods in or out of the storage and/or transport container(s) (8) are provided at the workstations (18), defining their position on the secondary conveyor (22) or a work bench (37).

13. Warehouse (1) for transferring goods as claimed in one of the preceding claims, **characterised in that** the detection means (23) for detecting the container data are disposed at the specific positions (38).

14. Warehouse (1) as claimed in one of the preceding claims, **characterised in that** at least one scale (30) for running a weight check of the storage and/or transport containers (8) is provided at at least one work station (18) of the incoming goods area (2).

15. Warehouse (1) for transferring goods as claimed in one of the preceding claims, **characterised in that** light sources (42) and/or light pen units (32) with light sources (42) corresponding in number to the maximum number of compartments (19) of the storage and transport containers(8) are disposed at the specific positions (38) and/or at a consignment position (39).

16. Warehouse (1) for transferring goods as claimed in one of the preceding claims, **characterised in that** one or more container storage lines (28) is or are connected to the conveyor system (10) for transport purposes for feeding in empty storage and/or transport containers (8).

17. Method of operating a warehouse for transferring goods, in particular for storage and transport containers (8) divided into compartments (19), preferably for articles (9) in small packages of articles, with a storage area (7) for so-called fast turnaround articles (9) and a storage area (5) for medium- and slow-turnaround articles (9), and with an incoming goods area (2), a consignment area (4), an outgoing goods area (6) and with conveyor systems (10) and loading and unloading means (12) and a storage, control and monitoring system (25) with a computer and memory unit (35) and external data input and output devices (26) and detection means (23) for article and container data, **characterised in that** a goods despatch order based on article types is detected in the computer and data memory unit (35), and the storage and transport container (8) containing the articles (9) relating to the order is conveyed by the storage, control and monitoring system (25) from the storage area (5) to the consignment area (4) or a workstation (18) of the consignment area (4) as a matter of priority to cover requirements or, in the event of an additional requirement due to a shortfall, from the incoming goods area (2), more or less simultaneously with at least one order container (20) coded for the goods despatch order via the conveyor system (10).

18. Method as claimed in claim 17, **characterised in that** the order container (20) is assigned to a workstation (18) of the consignment area (4) and is gated out of the endless conveyor system (16), allocated to a consignment order on the basis of its container data and deposited in a specific position (38).

19. Method as claimed in claim 17 or 18, **characterised in that** the storage and transport container (8) is already deposited in a consignment position (39) of the endless conveyor system (16) or a secondary conveyor (22) to enable the articles to be removed more or less at the same time as the order container (20) arrives.

20. Method as claimed in one of claims 17 to 19, **characterised in that** in order to remove articles at the consignment position (39), the compartments (19) containing the articles (9) to be removed are lit or illuminated by means of light beams (41) and the allocated order container (20) is preferably highlighted at the specific position (38) of the work station (18) by means of a light source (42).

21. Method as claimed in one of claims 17 to 20, **characterised in that** the number of articles (9) to be placed in the order container (20) is displayed on a display means (40) at the work station (18).

22. Method as claimed in one of claims 17 to 21, **characterised in that**, following a confirmation report that the predefined number of articles has been allocated, the order container (20) is fed via the gating-out system (31) to the order conveyor system (27).

23. Method as claimed in claim 17, **characterised in that**, following an incoming check and detection of article codes, which are read by means of scanners (29) for example, storage and transport containers (8) are allocated and made ready at a work station (18) of the incoming goods area on the basis of a filling quantity and article distribution predefined by the computer and data memory (35) and, during the filling process at the work station (18), priority monitoring takes place when a transport and storage container (8) is requested by the computer and data memory (35) for the consignment area (4) for removing articles (9) in readiness for an order-related consignment, and when a request occurs based on detection of the quantity of goods and a weight plausibility check by a weighing operation on a scale (30) the filling operation is interrupted and the storage and transport container (8) is fed via transfer conveyor means (15) from the endless conveyor system (14) of the incoming goods area (2) to the endless conveyor system (16) of the consignment area (4) and to a consignment position (39).

24. Method as claimed in claim 23, **characterised in that** the number of articles (9) to be placed in the storage and transport container (8) or a compartment (19) is displayed on a display means (40) at the work station (18) of the incoming goods area, and when the operation has terminated or is interrupted, a confirmation is run in the data input and output device (26) or the scale (30).

25. Method as claimed in claim 24, **characterised in that** the filling quantity of the articles (9) is pre-defined by the computer and data memory unit (35) on the basis of the volume of goods and holding capacity.

26. Method as claimed in claim 24, **characterised in that** the filling quantity per article type and storage and transport container (8) or compartment (19) is determined as a function of the turnaround number or the article type in order to obtain distributed access.

27. Method as claimed in one of claims 23 to 26, **characterised in that**, once the filling quantity has been confirmed, a weight check is run on the scale (30) and the weight plausibility check is run in the computer and data memory unit (35), after which the storage and transport container (8) is transferred to the endless conveyor system (14) of the outgoing goods area (2).

28. Method as claimed in one of claims 23 to 27, **characterised in that** the filled or partially filled storage and transport containers (8) are loaded into the storage areas (5, 7) chaotically but on the basis of access frequency in order to obtain as uniform as possible a utilisation of the capacity of the conveyor system (10) and/or the loading and unloading means (12).

29. Method as claimed in claim 17, **characterised in that** a proportion of the holding capacity of the endless conveyor system (14, 16) of the incoming goods area (2) and/or the consignment area (4) is operated as a buffer storage for the storage and transport containers (8).

30. Method as claimed in claim 29, **characterised in that** the proportion of holding capacity of the endless conveyor systems (14, 16) constituting a storage capacity is occupied by storage and transport containers (8) or article types as a function of turnaround frequency and/or turnaround quantities.

31. Method as claimed in one of claims 17 to 30, **characterised in that** storage and transport containers (8) with identical article types are unloaded in the storage area (5, 7) corresponding to the article group, preferably distributed on several storage shelves (II).

32. Method as claimed in one of claims 17 to 31, **characterised in that** article types can be freely allocated to the storage and transport container (8) or compartment (19).

33. Method as claimed in one of claims 17 to 32, **characterised in that** the information about the number of compartments (19) is contained in the container data and thus defines the holding capacity for the articles (9).

34. Method as claimed in one of claims 17 to 33, **characterised in that** the information about the orientation of the storage and transport containers (8) at the specific position (38) and/or at the consignment position (39) is contained in the container data.

35. Method as claimed in one of claims 17 to 34, **characterised in that,** in order to fill the storage and transport containers (8), the article (9) is initially detected by entering or reading in the article data at the article scanner (29) and the storage and transport container (8) is positioned on the specific position (38) or the scale (30), after which a predefined compartment (19) in which the article (9) is to be placed is highlighted by means of a light beam (41).

## Revendications

1. Entrepôt de chargement/déchargement de marchandises (1) pour des marchandises (9) à manipuler, dans des conteneurs de stockage et de transport (8) de préférence compartimentés, comprenant au moins deux zones de stockage (5, 7) pour des ensembles de marchandises avec une fréquence de chargement/déchargement différente et avec une zone d'entrée de marchandises (2) et avec au moins une zone de préparation de commandes (4) et avec des dispositifs de transport (10) dans la zone d'entrée de marchandises (2) et la zone de préparation de commandes (4) et les zones de stockage (5, 7), par exemple transporteur à bande, transporteur à bande à galets, et avec des moyens d'entrée et de sortie de stock (12), de préférence des appareils de commande de rayonnage pour l'entrée et la sortie de stock des conteneurs de stockage et/ou de transport (8) dans ou à partir de dispositifs de stockage, par exemple des stocks à rayonnage élevé, des stocks à rayonnage dynamique, et avec un dispositif de stockage, de commande et de contrôle (25), qui est relié au niveau de la communication avec des dispositifs d'entrée et de sortie (26) sur des postes de travail (18), et disposés sur les dispositifs de transport (10), reliés au niveau de la communication au dispositif de stockage, de commande et de contrôle (25), des moyens d'enregistrement (23), par exemple scanner de données (24) pour l'enregistrement de données de conteneurs des conteneurs de stockage et de transport (8), **caractérisé en ce que** le dispositif de transport (10) de la zone d'entrée de marchandises (2) est conçu comme dispositif de transport continu (14) et celui de la zone de préparation de commandes (4) également comme dispositif de transport continu (16), qui sont reliés les uns avec les autres par des moyens de transport par transfert (15) et sont reliés au niveau du transport aux moyens d'entrée et de sortie de stockage (12).

2. Entrepôt d'entrée et de sortie de marchandises (1) selon la revendication 1, **caractérisé en ce que** le dispositif de transport continu (14) de la zone d'entrée de marchandises (2) est relié au niveau du transport à une bande de stockage (36).

3. Entrepôt de chargement/déchargement de marchandises (1) selon la revendication 1 ou 2, **caractérisé en ce que** le dispositif de transport continu (14) et/ou la bande de stockage (36) et/ou le dispositif de transport continu (16) sont subdivisés en sections de transport contrôlées par une pluralité de moyens d'enregistrement (23) prévus le long d'une direction de transport.

4. Entrepôt de chargement/déchargement de marchandises (1) selon la revendication 1, **caractérisé en ce que** les conteneurs de stockage et de transport (8) sont subdivisés de préférence en compartiments de logement (19).

5. Entrepôt de chargement/déchargement de marchandises (1) selon la revendication 4, **caractérisé en ce que** les conteneurs de stockage et de transport (8) présentent de préférence deux ou quatre ou six ou huit des compartiments de logement (19).

6. Entrepôt de chargement/déchargement de marchandises (1) selon l'une quelconque des revendications précédentes, **caractérisé en ce qu'**il est prévu sur le conteneur de stockage et de transport (8) au moins un champ de marquage comprenant plusieurs données, par exemple champ de code-barres, bande magnétique, support de données électronique, etc..

7. Entrepôt de chargement/déchargement de marchandises (1) selon l'une quelconque des revendications précédentes, **caractérisé en ce que** la zone de préparation de commandes (4) est reliée au niveau du transport par un dispositif de transport de commande (27) à la zone de sortie de marchandises (6) pour la mise à disposition de la sortie de marchandises.

8. Entrepôt de chargement/déchargement de marchandises (1) selon l'une quelconque des revendications précédentes, **caractérisé en ce qu'**à chaque fois plusieurs postes de travail (18) dotés de dispositifs d'entrée et de sortie de données (26) sont disposés dans la zone d'entrée de marchandises (2) et dans la zone de préparation de commandes (4).

9. Entrepôt de chargement/déchargement de marchandises (1) selon l'une quelconque des revendications précédentes, **caractérisé en ce que** des transporteurs secondaires (22) reliés au niveau du transport aux dispositifs de transport continu (14, 16) par des moyens d'entrée et de sortie par sas (21) sont disposés sur les postes de travail (18).

10. Entrepôt de chargement/déchargement de marchandises (1) selon l'une quelconque des revendications précédentes, **caractérisé en ce que** les moyens d'enregistrement (23) pour l'enregistrement des données de conteneurs sont disposés sur les moyens d'entrée et de sortie par sas (21).

11. Entrepôt de chargement/déchargement de marchandises (1) selon l'une quelconque des revendications précédentes, **caractérisé en ce que** les moyens d'enregistrement (23) pour l'enregistrement des données de conteneurs sont disposés sur les moyens d'entrée et de sortie de stock (12).

12. Entrepôt de chargement/déchargement de marchandises (1) selon l'une quelconque des revendications précédentes, **caractérisé en ce qu'**il est prévu sur les postes de travail (18) dans leur position sur le transporteur secondaire (22) ou un pupitre de travail (37) des emplacements de positionnement (38) pour la manipulation des marchandises dans ou à partir des conteneurs de stockage et/ou de transport (8).

13. Entrepôt de chargement/déchargement de marchandises (1) selon l'une quelconque des revendications précédentes, **caractérisé en ce que** les moyens d'enregistrement (23) pour l'enregistrement des données de conteneurs sont disposés sur les emplacements de positionnement (38).

14. Entrepôt de chargement/déchargement de marchandises (1) selon l'une quelconque des revendications précédentes**, caractérisé en ce qu'**une balance (30) pour une pesée de contrôle des conteneurs de stockage et/ou de transport (8) est disposée sur au moins le poste de travail (18) de la zone d'entrée de marchandises (2).

15. Entrepôt de chargement/déchargement de marchandises (1) selon l'une quelconque des revendications précédentes, **caractérisé en ce que** sur les emplacements de positionnement (38) et/ou un emplacement de positionnement de préparation de commandes (39) sont disposés des sources lumineuses (42) et/ou des dispositifs indicateurs lumineux (32) avec des sources lumineuses (42) prévues en fonction d'un nombre maximum des compartiments de rangement (19) des conteneurs de stockage et de transport (8).

16. Entrepôt de chargement/déchargement de marchandises (1) selon l'une quelconque des revendications précédentes, **caractérisé en ce qu'**une ou plusieurs bandes de stockage de conteneurs (28) pour l'arrivée de conteneurs de stockage et/ou de transport (8) vides est ou sont reliées au niveau du transport au dispositif de transport (10).

17. Procédé pour l'exploitation d'un entrepôt de chargement/déchargement de marchandises pour des conteneurs de stockage et de transport (8) subdivisés en particulier en compartiments de rangement (19) de préférence pour des marchandises (9) dans des petits emballages d'articles, avec une zone de stockage (7) pour des marchandises (9) dites à rotation rapide et une zone de stockage (5) pour des marchandises (9) à rotation moyenne et lente, et avec une zone d'entrée de marchandises (2), une zone de préparation de commandes (4), une zone de sortie de marchandises (6) et avec des dispositifs de transport (10) et des moyens d'entrée et de sortie de stocks (12) et un dispositif de stockage, de commande et de contrôle (25) avec une unité d'ordinateur et de stockage (35) et des dispositifs d'entrée et de sortie de données (26) externes et des moyens d'enregistrement (23) pour des données d'articles et de conteneurs, **caractérisé en ce qu'**une commande de sortie de marchandises selon des variantes d'articles est enregistrée dans l'unité d'ordinateur et de stockage de données (35) et le conteneur de stockage et de transport (8) contenant la marchandise (9) spécifique à la commande pour la couverture des besoins provenant de préférence de la zone de stockage (5) ou, dans le cas d'un besoin supplémentaire, en cas de sous-couverture, provenant de la zone d'entrée de marchandises (2) est acheminé du dispositif de stockage, de commande et de contrôle (25) à la zone de préparation de commandes (4) ou à un poste de travail (18) de la zone de préparation de commandes (4) à peu près en même temps qu'au moins un conteneur de commande (20) indexé pour la commande de sortie de marchandises par l'intermédiaire du dispositif de transport (10).

18. Procédé selon la revendication 17, **caractérisé en ce que** le conteneur de commande (20) est attribué à un poste de travail (18) de la zone de préparation de commandes (4) et est évacué par sas du dispositif de transport continu (16), attribué avec ses données de conteneur à une commande de préparation de commandes et stationné sur un emplacement de positionnement (38).

19. Procédé selon la revendication 17 ou 18, **caractérisé en ce que** le conteneur de stockage et de transport (8) est mis à disposition à peu près simultanément avec la mise à disposition du conteneur de commande (20) sur un emplacement de positionnement de préparation de commandes (39) du dispositif de transport continu (16) respectivement un transporteur secondaire (22) pour le prélèvement de la marchandise.

20. Procédé selon l'une quelconque des revendications 17 à 19, **caractérisé en ce que,** pour le prélèvement de marchandises sur l'emplacement de positionnement de préparation de commandes (39), les compartiments de rangement (19) contenant la marchandise (9) à prélever sont éclairés au moyen de faisceaux lumineux (41) et le conteneur de commande (20) attribué est repéré à l'emplacement de positionnement (38) du poste de travail (18) de préférence au moyen d'une source lumineuse (42).

21. Procédé selon l'une quelconque des revendications 17 à 20, **caractérisé en ce que** le nombre de pièces, à attribuer au conteneur de commande (20), de la marchandise (9) est indiqué sur un moyen d'affichage (40) sur le poste de travail (18).

22. Procédé selon l'une quelconque des revendications 17 à 21, **caractérisé en ce que,** après un message de confirmation du nombre de pièces prédéfini pour l'attribution, le conteneur de commande (20) est amené par le dispositif d'évacuation par sas (31) au dispositif de transport de commande (27).

23. Procédé selon la revendication 17, **caractérisé en ce que**, après un contrôle d'entrée et un enregistrement de codes d'articles, par exemple par lecture d'entrée par scanner (29), on a une attribution et une mise à disposition du conteneur de stockage et transport (8) en fonction d'une quantité de remplissage prédéfinie par une mémoire d'ordinateur et de données (35) et d'une attribution d'articles sur un poste de travail (18) de la zone d'entrée de marchandises et pendant l'opération de mise en place sur le poste de travail (18), on a un contrôle de priorité sur demande d'un conteneur de transport et de stockage (8) à partir de la mémoire d'ordinateur et de données (35) pour la zone de préparation de commandes (4) pour un prélèvement de marchandises (9) pour une préparation de commande spécifique à la commande et, en cas de présence d'une demande, l'opération de mise en place avec l'enregistrement de la quantité de marchandises et d'un contrôle de vraisemblance de poids est interrompu par une opération de pesée sur une balance (30) et le conteneur de stockage et de transport (8) est amené par des moyens de transport et de transfert (15) du dispositif de transport continu (14) de la zone d'entrée de marchandises (2) au dispositif de transport continu (16) de la zone de préparation de commandes (4) et à un emplacement de positionnement de préparation de commandes (39).

24. Procédé selon la revendication 23, **caractérisé en ce que**, sur le poste de travail (18) de l'entrée de marchandises, le nombre de pièces, à mettre en place dans le conteneur de stock et de transport (8) ou un compartiment de rangement (19), de la marchandise (9) est indiqué sur un moyen d'affichage (40) et, après la fin ou une interruption de l'opération, une confirmation est effectuée dans le dispositif d'entrée de données et de sortie (26) ou sur la balance (30).

25. Procédé selon la revendication 24, **caractérisé en ce que** la quantité de remplissage de marchandise (9) est prédéfinie par l'unité de mémoire d'ordinateur et de données (35) en fonction du volume de marchandises et du volume de réception.

26. Procédé selon la revendication 24, **caractérisé en ce que** la quantité de remplissage est déterminée par variante d'articles et par conteneur de stockage et de transport (8), et par casier de rangement (19) en fonction de nombre de chargements et de déchargements de la variante d'articles, afin d'obtenir une dispersion d'accès.

27. Procédé selon l'une quelconque des revendications 23 à 26, **caractérisé en ce que,** après la confirmation de la quantité de remplissage, on a une pesée de contrôle sur la balance (30) et le contrôle de vraisemblance de poids dans l'unité de mémoire d'ordinateur et de données (35) et ensuite le conteneur de stockage et de transport (8) est transmis au dispositif de transport continu (14) de la zone d'entrée de marchandises (2).

28. Procédé selon l'une quelconque des revendications 23 à 27, **caractérisé en ce que** les conteneurs de stockage et de transport (8) remplis ou partiellement remplis sont stockés dans les zones de stockage (5, 7) de façon chaotique, mais en fonction de la fréquence d'accès afin d'obtenir une utilisation la plus régulière possible du dispositif de transport (10) et/ou des moyens d'entrée et de sortie de stock (12).

29. Procédé selon la revendication 17, **caractérisé en ce qu'**une partie d'une capacité d'absorption du dispositif de transport continu (14, 16) de la zone d'entrée de marchandises (2) et/ou de la zone de préparation de commandes (4) est gérée comme zone de tampon pour les conteneurs de stockage et de transport (8).

30. Procédé selon la revendication 29, **caractérisé en ce que** la fraction, formant une capacité de stockage, de la capacité d'absorption des dispositifs de transport de chargement et déchargement (14, 16) est occupée avec des conteneurs de stockage et de transport (8) respectivement les variantes de marchandises en fonction de la fréquence de chargement/déchargement et/ou des quantités de chargement/déchargement.

31. Procédé selon l'une quelconque des revendications 17 à 30, **caractérisé en ce que** les conteneurs de stockage et de transport (8) sont entrés dans le stock avec des quantités de marchandises identiques dans la zone de stockage (5, 7) correspondant au groupe de marchandises, de préférence réparties entre plusieurs rayonnages de stock (11).

32. Procédé selon l'une quelconque des revendications 17 à 31, **caractérisé en ce que** des variantes de marchandises peuvent être attribuées librement au conteneur de stockage et de transport (8) respectivement au compartiment de rangement (19).

33. Procédé selon l'une quelconque des revendications 17 à 32, **caractérisé en ce que** l'information concernant le nombre des compartiments de rangement (19) est incluse dans les données de conteneur et de ce fait la capacité d'absorption destinée à la marchandise (9) est définie.

34. Procédé selon l'une quelconque des revendications 17 à 33, **caractérisé en ce que** l'information sur l'orientation des conteneurs de stockage et de transport (8) sur l'emplacement de positionnement (38) et/ou sur l'emplacement de positionnement de préparation de commandes (39) est incluse dans les données de conteneur.

35. Procédé selon l'une quelconque des revendications 17 à 34, **caractérisé en ce que,** pour alimenter les conteneurs de stockage et de transport (8), après l'enregistrement des entrées de la marchandise (9) par l'entrée des données de marchandises sur le scanner d'articles (29) et la mise à disposition du conteneur de stockage et de transport (8) à l'emplacement de positionnement (38) respectivement sur la balance (30), à chaque fois un compartiment de rangement (19) prédéfini pour l'alimentation avec la marchandise (9) est repéré au moyen d'un faisceau lumineux (41).
